(19) Europäisches Patentamt
European Patent Office
Office européen des brevets

(11) **EP 2 482 220 A1**

(12) **EUROPEAN PATENT APPLICATION**

(43) Date of publication:
**01.08.2012 Bulletin 2012/31**

(51) Int Cl.:
*G06F 21/00* (2006.01)　　　*G07F 7/10* (2006.01)

(21) Application number: **12152714.7**

(22) Date of filing: **26.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.01.2011 US 201161436833 P**

(71) Applicant: **SafeNet, Inc.**
**Belcamp, MD 21017 (US)**

(72) Inventors:
 • **Spring, Kirk**
 **Glen Rock, PA 17327 (US)**

 • **Geraghty, Elizabeth**
 **Ellicott City, MD 21043 (US)**
 • **McKee, Dean**
 **Irvine, CA 92604 (US)**

(74) Representative: **Anderson, Angela Mary**
 **Murgitroyd & Company**
 **Immeuble Atlantis**
 **55 Allée Pierre Ziller**
 **Sophia Antipolis**
 **06560 Valbonne (FR)**

(54) **Multi-enclave token**

(57)　A security token has multiple independent application enclaves, on which different application providers can install encryption keys and/or other data to authenticate a user of the token to their respective applications.

FIG. 2

**Description**

BACKGROUND OF THE INVENTION

In order to protect a computer system against unauthorized access, it is usual to require a would-be user to identify him or her self to the system when attempting access. Various methods of authentication are known, including requiring a user to enter a username and/or password, requiring a user to present a physical token to the computer system, and requiring a user to present a fingerprint or other biometric parameter to a sensor connected to the system. Two or more of these methods may be used together for added security.

Physical tokens of varying sorts are widely used. At the higher end, they typically consist of a device including a microprocessor chip with encryption capabilities that can exchange authenticating challenges and responses with a "middleware" process running on a host computer, which then controls access to actual resources. The physical format of the token is typically either a "smart card" the size and shape of a credit card, or a compact device with a USB plug on one end. These devices are easily portable, and if the cryptographic authentication of the device itself is combined with a requirement for the bearer of the device to provide a matching personal identification number (PIN) or other passcode, are sufficiently secure for all but the most sensitive uses.

However, many users need to authenticate themselves to multiple systems, each of which typically issues its own identifying token. Both the bulk of multiple tokens and the need to search through them to find the correct one become a nuisance for the user. The problem of bulk is worse with USB tokens, because the thickness of the USB plug means that they do not stack as compactly as card formats.

The Global Platform Functionality (GPF) available within the Java Operating System already makes possible a smart card or other token with multiple user Security Domains. However, the GPF assumes that the token as a whole is controlled by a single "Card Issuer," who is represented on the token by an Issuer Security Domain. The GPF also permits one or more Supplementary Security Domains, which may represent application providers other than the Card Issuer. The GPF also permits Controlling Authority Security Domains, which are a special sort of Supplementary Security Domain that has the power to enforce a security policy on all application code loaded onto the token. As a result, any application provider other than the Card Issuer is subject to the control of the Issuer and of any Controlling Authorities on the token. Where the token is being used as an authentication token, it is typically unacceptable to the provider for his presence on the card to be subject to the supervision of other entities in that way.

SUMMARY OF THE INVENTION

According to one embodiment of the invention, there are provided systems, tokens, methods, and computer programs that make possible a multi-enclave token, compatible with existing authentication tokens and protocols, that maintains multiple application enclaves sufficiently independent to be acceptable as authenticating token enclaves to all but the most stringent of providers.

One aspect of the invention provides a token for use with an electronic system, comprising a processor, non-volatile program storage memory, and non-volatile data storage memory. The non-volatile program storage memory contains a single copy of an operating system. The non-volatile data storage memory comprises a plurality of enclaves each containing policy and setting data usable by the operating system. The non-volatile data storage memory comprises computer readable code operative to permit the processor to access a selected one of the enclaves of the data-storage memory, and to deny said processor access to all other of said enclaves, and to cause the processor to run the operating system using said at least one registry, applet, or key object contained by said one enclave.

An enclave may contain all the policies and settings to enable the token, when using that enclave, to emulate a GPF token with multiple Security Domains.

In an embodiment, a token further comprises an external communication port. The non-volatile program storage memory contains computer readable code operative to cause the processor, on connection of the external communication port to a computer system, to receive through the communication port an enclave query message, in response to the enclave query message to transmit through the communication port an enclave query response message identifying one or more said enclaves defined on the token, to receive through the communication port an enclave select message specifying one of the enclaves identified in the enclave query response message, and in response to the enclave select message, to permit the token to interact with the computer system using only the specified enclave of the non-volatile data storage memory.

In an embodiment, the token is operative, upon receiving an unrecognized message instead of said enclave query message, to permit the token to interact with the computer system using only a pre-defined default enclave.

In an embodiment, the operating system has a data address space smaller than the non-volatile data storage memory, and permitting the processor to access only a selected enclave of the non-volatile data storage memory comprises relating a portion of the non-volatile data storage memory corresponding to the selected enclave to the data address space of the operating system.

In an embodiment, relating a portion of the non-volatile data storage memory to the data address space of the operating system comprises loading contents of only the respective enclave into volatile memory accessible to the operating system.

An embodiment of a token further comprises information identifying its enclaves, stored in a portion of the non-volatile data storage memory that is not accessible to the processor when the processor is permitted to access an enclave.

In an embodiment, data in the non-volatile data storage memory is encrypted, and permitting the processor to access only a selected enclave of the non-volatile data storage memory comprises providing a decryption key specific to the selected enclave.

In an embodiment, the single copy of the operating system comprises only code common to all of the enclaves, and operating system code that is different for different enclaves is contained for each enclave in the respective policy and setting data. In an embodiment, the policy and setting data may comprise at least one of a registry, an applet, and a key object. Each enclave then typically contains its own registry, its own complete set of applets, and its own data encryption key objects. The sets of applets may be identical, partly identical, or different, depending on the requirements of the application provider to whom each enclave belongs. Another aspect of the invention provides a computer system, comprising a processor, a data communication port, and non-volatile storage containing computer readable code. The computer readable code comprises middleware operative to interface with a token connected to said data communication port. The middleware is operative to cause the processor to send an enclave query message through the communication port, to receive through the communication port in response to the enclave query message an enclave query response message identifying one or more enclaves, to determine whether any of the one or more enclaves is an enclave associated with the middleware, and if so to send an enclave select message specifying said associated enclave through said communication port, and subsequently to interact with the token as if the associated enclave were the only active enclave on the token.

A further aspect of the invention provides a method of securing computer systems, communications, and/or data comprising interfacing a token according to the first-mentioned aspect with a computer system according to the second-mentioned aspect, activating the token in a selected enclave, and using the token as if it were an ordinary security token. Another aspect of the invention provides a non-volatile computer readable storage medium comprising computer readable code for the middleware and/or for the token.

Other aspects of the invention include methods, computers and computer systems, computer programs, and non-transitory computer-readable storage media containing computer programs.

BRIEF DESCRIPTION OF THE DRAWINGS

The above and other aspects, features, and advantages of the present invention may be more apparent from the following more particular description of embodiments thereof, presented in conjunction with the following drawings. In the drawings:

FIG. 1 is a schematic diagram of an embodiment of a computer system.
FIG. 2 is a schematic diagram of a multi-user token usable in the system of FIG. 1.
FIG. 3 is a flow-chart of the use of the token of FIG. 2.
FIG. 4 is a flow-chart of the management of the token of FIG. 2.

DETAILED DESCRIPTION OF THE PREFERRED EMBODIMENTS

A better understanding of various features and advantages of the present methods and devices may be obtained by reference to the following detailed description of illustrative embodiments of the invention and accompanying drawings. Although these drawings depict embodiments of the contemplated methods and devices, they should not be construed as foreclosing alternative or equivalent embodiments apparent to those of ordinary skill in the subject art.

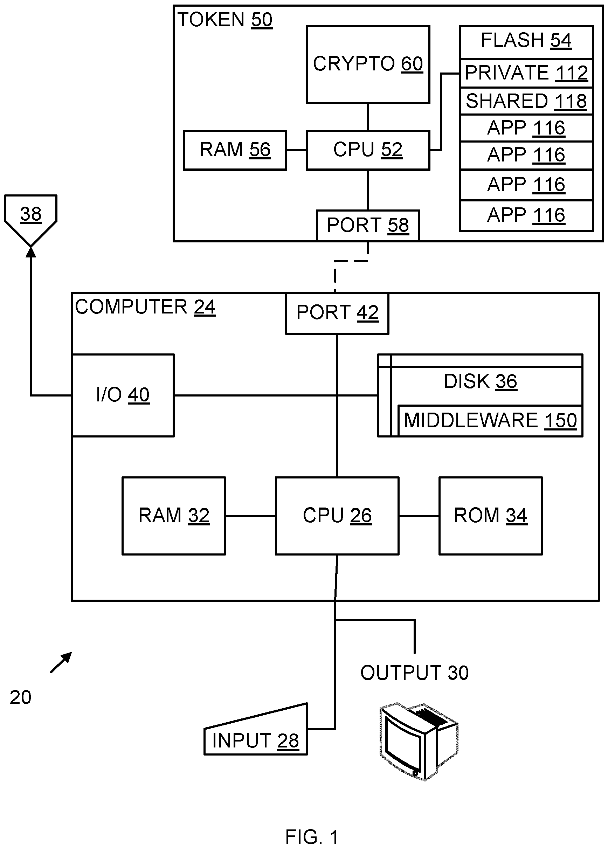

Referring to the drawings, and initially to FIG. 1, one embodiment of a computing system indicated generally by the reference number 20 comprises, among other equipment, a computer 24 comprising a processor 26, input and output devices 28, 30, random access memory (RAM) 32, read-only memory (ROM) 34, and magnetic disks or other long-term storage 36. The computer 24 may stand alone, or may be connected to an external network or other communications media 38 through one or more I/O ports 40. The input and output devices of computer 24 further include a port 42 to which a token 50 can be connected. The port 42 may be, for example, a USB socket into which a USB token 50 can be inserted, a smart card reader into which a smart card 50 can be inserted, or the like. The token 50 comprises at least a microprocessor 52, non-volatile storage 54, for example, flash memory, random access memory (RAM) 56, and an external interface 58 compatible with port 42. The token 50 may also comprise a hardware cryptographic module 60.

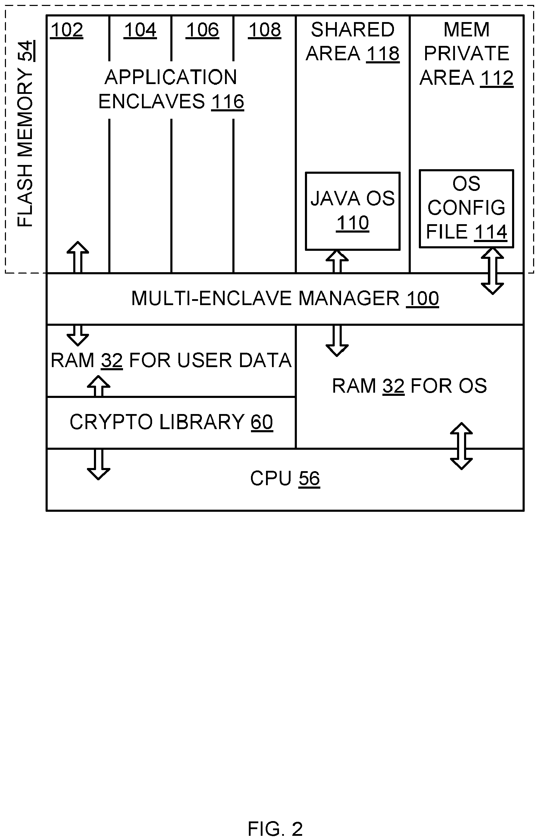

Referring now also to FIG. 2, an embodiment of the token 50 comprises a multi-enclave manager 100 and a plurality of application enclaves or partitions 102, 104, 106, 108, each used by an individual application provider. The number of application enclaves may be fixed when the token 50 is created, or may be configurable by a user having administrator privileges on multi-enclave manager 100. Each of these application enclaves runs an operating system 110, which in an embodiment comprises a Java OS, including the Java Global Platform functionality. In an embodiment, the Java OS 110 supports a Java Card virtual machine, Global Platform Functionality, a Java Card cryptographic library, and an ISO 7816 protocol for the USB interface, or an appropriate protocol for a different interface to port 58. The Java OS 110 may also support a crypto extension library, interfacing with cryptographic module 60.

The multi-enclave manager 100 is minimal. Its operating function is to configure itself on startup of the card, to conduct initial handshaking with computer 24, determine which application enclave 102, 104, 106, 108, is relevant to the specific interaction with the specific computer 24, and hand off to the appropriate application enclave 102, etc. For this purpose, multi-enclave manager 100 is allocated a memory area 112 in non-volatile storage 54 within which it stores a list of application enclaves giving the status and type of each enclave. The multi-enclave manager acts more analogously to the BIOS in an ordinary computer system than to an operating system, enabling the system to start up to the point where the Java OS 110 can take over, and handling some very basic low-level functions. The multi-enclave manager is as far as possible stored in factory-programmed ROM, to minimize the risk of its becoming compromised.

Multi-enclave manager 100 may then act as a hypervisor, ensuring that the active application enclave 102, etc., accesses only memory and other resources allocated to it. It is preferred, however, that multi-enclave manager 100 merely sets up address translation from the address space of OS 110 to the portion of non-volatile memory 54 belonging to the active application enclave 102, etc., and sets up the decryption key necessary for the OS 110 to use that memory portion. In a preferred embodiment, OS 110 has a limited address space for application data, and the portion 116 of non-volatile memory 54 allocated to each application enclave 102, etc. is equal in size to the entire application data address space of OS 110. The multi-enclave manager 100 maps the application data address space of OS 110 to a window in the physical address space of non-volatile memory 54 containing the specific portion of non-volatile memory 54 belonging to the active application enclave 102. It is then almost impossible for OS 110 to access other portions of non-volatile memory 54 belonging to other application enclaves 102, etc.

Multi-enclave manager 100 may have hard-coded memory control such that multi-enclave manager 100 can access private memory area 112, but never permits Java OS 110 to access private memory area 112, even when the memory space of Java OS 110 is not mapped to an application enclave 102.

In an embodiment, multi-enclave manager 100 controls memory access by copying memory portion 116 into RAM 56, and allowing OS 110 to directly access only the RAM copy. Limiting the amount of physical RAM available for this purpose, and restricting writes from RAM 56 to flash memory 54 to specific address spaces within flash memory 54, provides a further safeguard against an application enclave 102, etc. accessing memory belonging to multi-enclave manager 100 or to another application enclave. In an embodiment, the multi-enclave manager private memory area 112 comprises an OS configuration file 114 that specifies data such as:

the number of application enclaves;
the identity of a default enclave;
which, if any, of the enclaves are disabled;
which, if any, of the enclaves are unused;
a license key used to authenticate any attempt to provision an unused enclave.

In another embodiment, the default enclave may be fixed, for example, as a first enclave 102 on the token 50, and the OS configuration file 114 may then omit the identity of the default enclave.

In an embodiment, the OS configuration file 114 also specifies data for each application enclave, such as:

an enclave ID, enclave Authentication Key, or other identifying information used to connect the token 50 to an external security domain for that application;
an enclave mode flag indicating, for example, whether the enclave runs in a FIPS-compliant or a non-FIPS mode;
an enclave applet type flag indicating, for example, whether the enclave is restricted to running applets that can be authenticated by the multi enclave manager 100, or identifying a root Certification Authority for authenticating applets to run on the enclave.

Application enclaves 102, etc. in this embodiment closely resemble the application domain in a single-user token that the multi-enclave token 102 is intended to emulate. Application enclaves 102, etc. share a single copy of Java OS 110, stored in a shared part 118 of issuer memory area that is accessible to whichever application enclave 102, etc. is active, but each application enclave 102, etc. has its own policy and setting data, such as applets, certificates, cryptographic keys, and card registry, stored in the portion 116 of the non-volatile storage 54 allocated exclusively to that application enclave 102, etc. The applets may include an activation applet, a file manager applet, and an appropriate encryption applet.

As explained in more detail below, separation of the memory areas 116 may also be enforced by encrypting the data in each area 116 with a key exclusive to the associated application enclave 102, etc.

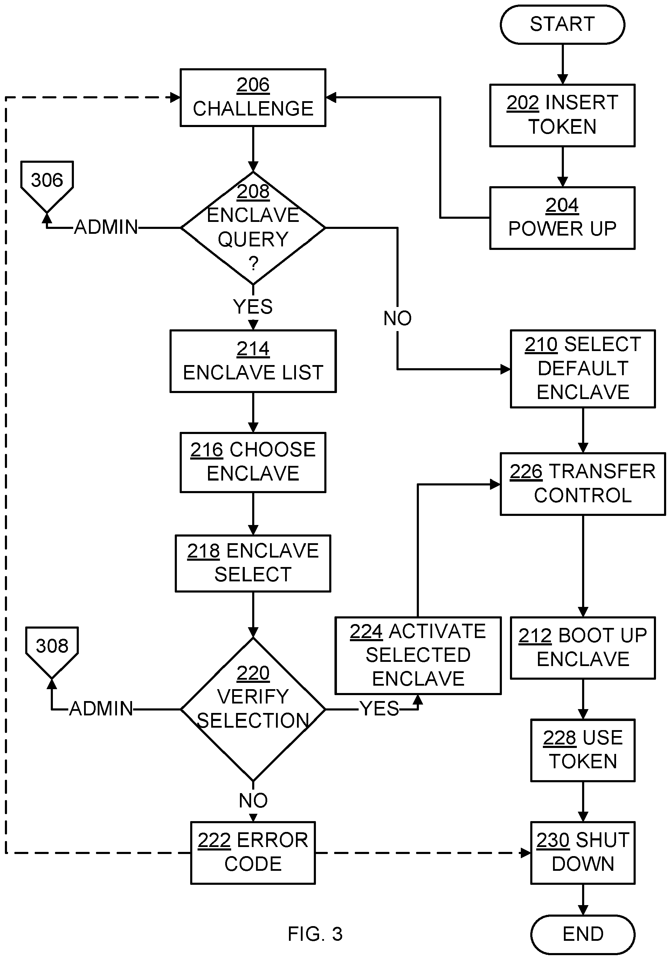

Referring to FIG. 3, in use of the computer system 20 and token 50, a user of token 50 wishes to access resources on or through computer 24. In step 202, user connects token 50 to port 42, for example, by inserting the plug 58 of a USB token 50 into a USB socket 42, or inserting a smart card token 50 into a smart card reader 42. In step 204, the token 50 powers up from the port 42, and the multi-enclave manager 100 launches. At this point the default enclave specified by the OS Configuration file 114 is set as default enclave. Any subsequent changes in the default enclave will not take effect until next time the token 50 is powered up.

In step 206, a middleware process 150 running on computer 24 interrogates token 50, and in step 208 multi-enclave manager 100 determines the nature of the interrogation.

If middleware process 150 is not aware of multi-enclave token 50, then the interrogation will be appropriate to a single-user token. If any interrogation other than a proper "enclave query" or "enclave select" command, as described below, is received, then multi-enclave manager 100 may assume that middleware process 150 is not multi-enclave aware. In step 210, multi-enclave manager 100 then passes control to whichever application enclave 102, etc. is defined as the default enclave. In step 212, the token 50 boots from the chosen enclave 102, etc. If there is no default domain, then instead of proceeding to step 210 the multi-enclave manager 100 may loop back to step 206 to await a valid enclave query, or may shut down.

If middleware process 150 is aware of multi-enclave token 50, then the interrogation in step 208 consists of an "enclave query" command, which may be an arbitrary string of bytes. In step 214 the multi-enclave manager 100 returns an enclave query response providing a list of enclaves, together with a challenge, which may be a random or pseudorandom number. The response may provide, for example, some or all of:

> the number of enclaves 102, etc. on the token 50;
> the identity of a default enclave;
> list of unused enclaves;
> list of data for each active enclave from the OS configuration file;
> a challenge word, which may be, for example, a pseudorandom number.

In step 216, middleware process 150 inspects the list of data for each enclave, and identifies the enclave 102, etc. corresponding to itself.

In step 218, middleware process 150 returns to token 50 an "enclave select" command specifying the enclave with which the middleware 150 wishes to interact. The enclave may be identified simply by a number indicating its position in the list provided in the response to the enclave query command. Middleware 150 also returns a response to the challenge word, consisting of, for example, a pseudorandom number generated using an enclave Authentication Key specific to the requested enclave, the enclave ID, and the challenge word. The use of a random or pseudorandom challenge word guards against replay attacks. The use of a pseudorandom function in the response that is a shared secret between middleware process 150 and multi-enclave manager 100, and the use of an enclave Authentication Key that is a shared secret between the middleware process 150 and the desired application enclave 102, etc., provide protection against access by unauthorized middleware processes 150. The inclusion of the enclave ID and/or the Enclave Authentication Key provides protection against the inadvertent selection of the wrong enclave.

In step 220, multi-enclave manager 100 verifies that the response is correct for the enclave requested, and returns a code that may merely indicate successful authentication. In step 224, multi-enclave manager 100 then activates the requested one of application enclaves 102, etc. Activation may comprise defining a memory window, so that the data memory address space of Java OS 110 maps to the portion of flash memory 54 containing data for the appropriate application enclave 102, etc. Activation may comprise loading the appropriate portion of flash memory 54 into RAM 56, and allowing Java OS 100 to access only the RAM copy. In an embodiment, the application data in flash memory 54 is encrypted with a key specific to the application enclave, and activation comprises providing a correct decryption key for that application data.

In an embodiment, the initial User Key Encryption Key may be generated by an expression such as:

$$UserKEK = PRF \, (UserPIN, \, Enclave \, ID, \, DeviceKEK) \oplus \; MNumb \oplus$$

$$DeviceKEK$$

Where: UserKEK is the key to be generated;
PRF is a predefined pseudo-random function;

UserPIN is a PIN entered manually by the user;

DeviceKEK is a key specific to the individual token 50 but common to all enclaves;

MNumb is a random number specific to the individual enclave. DeviceKEK and MNumb are stored on token 50. The MNumb values may be included in the OS Configuration file 114 entry for each application enclave 102, etc. DeviceKEK may be stored in various places on token 50, depending on the level of security desired, and may be split between two or more storage places. For example, part or all of DeviceKEK may be stored in obfuscated form in flash memory 54, or in protected memory in an ASIC forming part of CPU 52 or cryptographic engine 60.

In step 226, multi-enclave manager 100 then passes control to the requested one of application enclaves 102, etc. The process then proceeds to step 212, and the token 50 boots from the selected enclave 102, etc. If the enclave select message is not correct, in step 222 the multi-enclave manager 100 returns an error code, and either shuts down or loops back to step 206 to await a more correct enclave query, or to step 216 to await a more correct enclave select.

From step 212, the process proceeds to step 228, in which the token 50 serves as a conventional security token. For example, it may provide encryption, digital signing, or user authentication, using user keys that were stored in encrypted form in application enclave space 116 in flash memory 54. The cryptographic engine 60 (if present) or the token CPU 52 may then handle cryptographic processing, so that the active keys are never exposed outside token 50.

Multi-enclave manager 100 remains minimally active, for the sole purpose of ensuring that any writes to flash memory 54 are confined to the memory portion 116 that is under the exclusive control of active application enclave 102.

In step 230, the token 50 is removed from port 42, or computer 24 is shut down. Token 50 then automatically shuts down because it no longer has a power supply.

Other sequences are possible. For example, if middleware process 150 knows which "slot" is occupied by that enclave, it could issue an "enclave select" command without first issuing an "enclave query" command. However, a challenge and response cycle between the middleware process 150 and the multi-enclave manager 100 may still be desirable. Alternatively, the "enclave select" command could specify, for example, an enclave type, instead of specifying the enclave position. The format of the enclave type codes may be determined depending on the expected use of the tokens 50, for example, depending on the number of distinct codes that are needed. In particular, a token 50 should not usually be shared by two different application enclaves with indistinguishable type codes, so the format should allow for a sufficient number of distinct codes.

In general, any information sufficient to uniquely identify the available application enclaves 102, etc., and to enable the middleware process 150 to recognize its proper application enclave 102, etc., may be used in the enclave query and response and enclave select messages.

In an embodiment, where different ones of application enclaves 102, etc. have different security levels, default enclave 102 is the enclave of lowest security level on the token. That minimizes the risk of exposing a high security level application enclave on token 50 to unknown or malfunctioning middleware 150 of lower security level. In other embodiments, however, the choice of default enclave 102, etc. is dictated by the presence of an application provider that cannot or will not support the multi-enclave functionality of token 50.

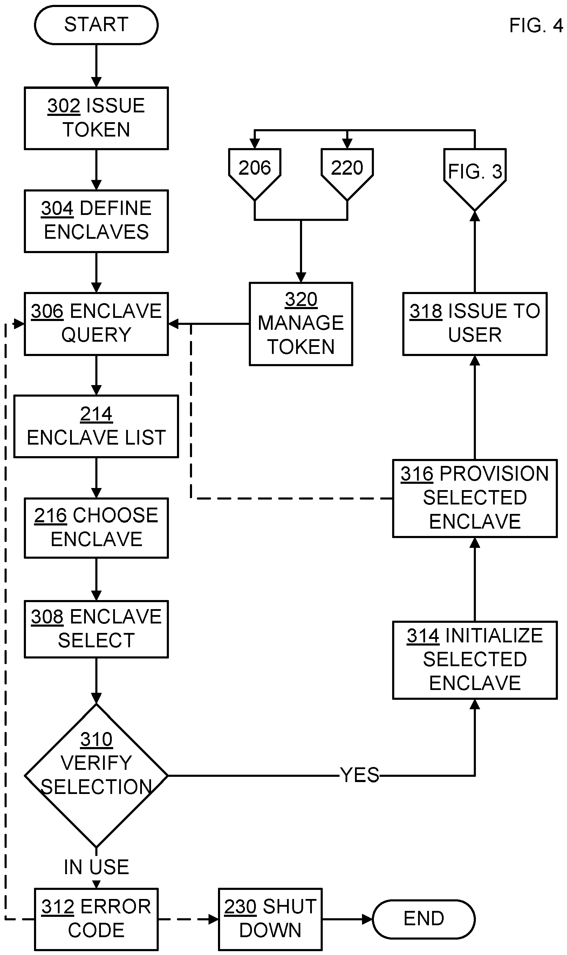

Referring to Fig. 4, in step 302, token 42 is initially issued with multi-enclave manager 100 initiated and populated, and shared Java OS 110 loaded in shared memory area 118. In step 304, application enclaves 102, etc. are defined and initialized, in an empty and unused state. In an embodiment, those empty application enclaves consist of allocated physical space 116 in flash memory 54, and sufficient information in OS configuration file 114 to identify each enclave, and to identify its physical memory space 116. Step 304 may be combined with step 302, or may be separate. If steps 302 and 304 are separate, then step 304 may be carried out by a token issuer different from the manufacturer who carries out step 302. Depending on the specific token, the number of application enclaves 102, etc. may be fixed, or may be configurable in step 304. If the number of application enclaves 102, etc. is configurable, then reducing the number of enclaves below a maximum may increase the amount of memory 116 assigned to each enclave, or may leave some memory unassigned. Where the number of application providers who will share token 50 is known in advance, limiting the number of application enclaves 102, etc. to that number may improve security, by avoiding the presence of available unused enclaves 102, etc. onto which malware could be installed.

In step 306, an enclave administrator uses the "enclave query" command to identify unused enclaves on token 50. In step 308, the enclave administrator uses the "enclave select" command to select an enclave to configure. Because an unused enclave does not have an enclave Authentication Key, an unauthenticated Enclave Select command is accepted. Usually, the chosen enclave will be the first unused enclave. In step 310, if the application enclave administrator attempts to select an application enclave 102, etc. that is already active, the token 50 will require the authenticated Enclave Select command for that application enclave, preventing a person not authorized on that enclave from altering its configuration. In step 312, if the unauthenticated Enclave Select command is invalid, or is directed to an application enclave 102, etc. that is already active, the multi-enclave manager 100 returns an error message and either shuts down or loops back to step 306 to await a more proper request.

Multi-enclave manager 100 may allow any unused enclave to be initialized by any user who has the correct shared secret pseudorandom function to generate a valid enclave select message, or may require an additional password or other credential. For example, the token 50 may require a license key, separately supplied to application provider by token issuer, in order to permit initialization of an unused enclave.

In step 314, the application enclave administrator initializes the application enclave 102, etc. at the multi-enclave manager 100 level. The multi-enclave manager 100 is provided with the enclave type that will be reported in the response to an enclave query command, and with the Enclave Authentication Key that is used in the enclave select challenge-response.

In step 316, the enclave administrator initializes and provisions the application enclave 102, etc. This step is generally similar to the initialization and provisioning of a single-user token that the multi-enclave token 50 emulates. The initialization and provisioning process at the application enclave level varies from token to token, and is well known to those skilled in the art, so it is not described in more detail here. In general, it involves the installation onto the token of keys, certificates, and applets supplied by the application provider. In an embodiment, the enclave may contain an entire Global Platform GPF domain hierarchy.

In step 318, the token 50 is issued to a user for use as described with reference to FIG. 3.

Either before or after step 318, the management process may return to step 306 to initialize and configure additional application enclaves 102, etc. It will typically be necessary to shut down and restart the token 50 in order to access a different enclave. The application enclave administrator responsible may be the same as, or different from, the application enclave administrator for any existing application enclave.

In step 320, management functions may be carried out on an existing active token 50. These functions may be carried out by an application provider remotely, by accessing the card through middleware 150 when the user next connects token 50 to middleware 150 on the relevant security domain. Management functions in the application enclave 102, etc. may include managing applet and Global Platform audit logs, resetting a user PIN for the enclave, and updating or deleting any or all of the applets, keys, or other application data stored in application enclave memory area 116.

In order to carry out management functions at the multi-enclave manager level 100 relating to a specific application enclave, it may be necessary to log on with an application administrator credential at step 218. Management functions may include updating the Enclave Authorization Key, resetting a user PIN for the enclave, and resetting an enclave to "unused". When an application enclave 102, etc. is reset, all data in the enclave-specific memory area 116 is preferably actively erased.

In order to carry out management functions relating to the multi-enclave manager level 100, it may be necessary to log on with a multi-enclave manager administrator credential at step 212 or step 218. Management functions relating to the multi-enclave manager 100 may include: managing applet and GP audit logs; resetting a user PIN for the token; updating or deleting any or all applets or keys, including a master key-encryption key for the token, and resetting an application enclave. Deleting the DeviceKEK prevents the token 50 from validating an enclave select command, and may effectively render the token useless, or may result in the token operating only as a single-enclave token on the default enclave. Rendering the token useless may be desirable if the card is believed to be lost, stolen, or seriously compromised.

The multi-enclave manager administrator may or may not be allowed to reset or otherwise manage an individual application enclave without also having an application administrator credential for that enclave.

Although specific embodiments have been described, various modifications are possible without departing from the spirit of the invention or the scope of the appended claims, and features of the different embodiments may be combined into one embodiment.

For example, as described, if token 50 is challenged by a middleware process 150 that is not aware of multi-enclave token 50, then control passes to default enclave 102, etc. Consequently, token 50 can support only one provider that does not recognize multi-enclave token 50. It would be possible, in at least some circumstances, for multi-enclave manager 100 to recognize the challenges from different provider middleware 150, and direct each challenge to the appropriate application enclave 102, 104, etc. However, that would depend on the specific initial challenges used by different systems, and would have to be determined on a case-by-case basis.

Alternatively, there may be no default enclave, and the token 50 may reject any initial challenge other than a proper enclave query message or a token-issuer level administrator logon.

In the interests of simplicity, it has been assumed in describing the embodiments that computer 24 is an ordinary general-purpose computer specially programmed that controls user access to valuable resources, and the resources controlled by middleware 150 have not been considered in detail. In an embodiment, the controlled resource may be computer 24 itself. In another embodiment, the controlled resource may be a computing resource on a network 38, where computer 24 is a client computer or terminal on the network. In a further embodiment, the controlled resource may be physical access to space, and the computer 24 may be an electronic door lock. In a further embodiment, computer 24 may be a device handling encrypted communications, and the token 50 may contain encryption and/or decryption keys.

Accordingly, reference should be made to the appended claims, rather than to the foregoing specification, as indicating the scope of the invention.

**Claims**

1.  A token for use with an electronic system, comprising:

    a processor;
    non-volatile program storage memory; and
    non-volatile data storage memory;

    wherein the non-volatile program storage memory contains a single copy of an operating system;
    wherein the non-volatile data storage memory comprises a plurality of enclaves each containing policy and setting data usable by the operating system;
    wherein the non-volatile data storage memory comprises computer readable code operative to permit the processor to access a selected one of the enclaves of the data-storage memory, and to deny said processor access to all other of said enclaves, and to cause the processor to run the operating system using said policy and setting data contained by said one enclave.

2.  A token according to claim 1, further comprising an external communication port;
    wherein the non-volatile program storage memory contains computer readable code operative to cause the processor, on connection of the external communication port to a computer system, to:

    receive through the communication port an enclave query message;
    in response to the enclave query message, transmit through the communication port an enclave query response message identifying one or more said enclaves defined on the token;
    receive through the communication port an enclave select message specifying one of the enclaves identified in the enclave query response message; and
    in response to the enclave select message, permit the token to interact with the computer system using only the specified enclave of the non-volatile data storage memory.

3.  A token according to claim 2 operative, upon receiving an unrecognized message instead of said enclave query message, to permit the token to interact with the computer system using only a pre-defined default enclave.

4.  A token according to claim 1, wherein said operating system has a data address space smaller than said non-volatile data storage memory, and wherein permitting the processor to access only a selected enclave of the non-volatile data storage memory comprises relating a portion of the non-volatile data storage memory corresponding to the selected enclave to the data address space of the operating system.

5.  A token according to claim 4, wherein relating a portion of the non-volatile data storage memory to the data address space of the operating system comprises loading contents of only the respective enclave into volatile memory accessible to the operating system.

6.  A token according to claim 1, further comprising information identifying said enclaves, stored in a portion of said non-volatile data storage memory that is not accessible to said processor when said processor is permitted to access any said enclave.

7.  A token according to claim 1, wherein data in said non-volatile data storage memory is encrypted, and wherein permitting the processor to access only a selected enclave of the non-volatile data storage memory comprises providing a decryption key specific to the selected enclave.

8.  A token according to claim 1, wherein said single copy of the operating system comprises only code common to all of said enclaves, and operating system code that is different for different enclaves is contained for each enclave in the respective policy and setting data.

9.  A token according to claim 1, wherein said policy and setting data for each enclave comprises at least one of a registry, an applet, and a key object.

10. A computer system, comprising:

    a processor;

a data communication port; and

non-volatile storage containing computer readable code;

wherein said computer readable code comprises middleware operative to interface with a token connected to said data communication port;

wherein said middleware is operative to cause said processor to:

send an enclave query message through said communication port;

receive through said communication port in response to said enclave query message an enclave query response message identifying one or more enclaves;

determine whether any of said one or more enclaves is an enclave associated with said middleware; and if so send an enclave select message specifying said associated enclave through said communication port; and subsequently interact with said token as if said associated enclave were the only active enclave on said token.

11. A computer system according to claim 10, further comprising at least one said token that is a token comprising:

a processor;

non-volatile program storage memory; and

non-volatile data storage memory;

wherein the non-volatile program storage memory contains a single copy of an operating system;

wherein the non-volatile data storage memory comprises a plurality of enclaves each containing policy and setting data usable by the operating system;

wherein the non-volatile data storage memory comprises computer readable code operative to permit the processor to access a selected one of the enclaves of the data-storage memory, and to deny said processor access to all other of said enclaves, and to cause the processor to run the operating system using said policy and setting data contained by said one enclave.

12. A method of securing data, comprising;

connecting a token to a computer, the token comprising a processor, a single copy of an operating system, and non-volatile data storage memory divided into a plurality of enclaves;

sending an enclave query message from middleware on the computer to the token;

the token sending to the computer in response to said enclave query message an enclave query response message identifying one or more enclaves on the token;

determining whether any of said one or more enclaves is an enclave associated with said middleware; and if so sending an enclave select message specifying said associated enclave from said computer to said token;

the token accessing the specified one of the enclaves, running the single copy of the operating system using policy and setting data contained by said specified enclave, and denying access to all other of said enclaves; and

subsequently interacting with said token as if said associated enclave were the only active enclave on said token.

FIG. 1

FIG. 2

FIG. 3

FIG. 4

```
                    ┌─────────┐
                    (  START  )
                    └────┬────┘
                         │
                         ▼
                 ┌──────────────┐
                 │  302 ISSUE   │
                 │    TOKEN     │
                 └──────┬───────┘
                         │
                         ▼                    ┌──────┐ ┌──────┐        ┌────────┐
                 ┌──────────────┐             │ 206  │ │ 220  │        │ FIG. 3 │
                 │  304 DEFINE  │             └──┬───┘ └──┬───┘        └───┬────┘
                 │   ENCLAVES   │                │        │                ▲
                 └──────┬───────┘                └───┬────┘                │
                         │                           ▼                     │
                         ▼                    ┌──────────────┐     ┌──────────────┐
                 ┌──────────────┐             │     320      │     │ 318 ISSUE TO │
                 │ 306 ENCLAVE  │◄────────────│   MANAGE     │     │     USER     │
                 │    QUERY     │◄───┐        │    TOKEN     │     └──────┬───────┘
                 └──────┬───────┘    │        └──────────────┘            ▲
                         │           │                                    │
                         ▼           │                            ┌──────────────┐
                 ┌──────────────┐    │                            │ 316 PROVISION│
                 │     214      │    │                            │   SELECTED   │
                 │ ENCLAVE LIST │    │                            │   ENCLAVE    │
                 └──────┬───────┘    │                            └──────┬───────┘
                         │           │                                    ▲
                         ▼           │                                    │
                 ┌──────────────┐    │                            ┌──────────────┐
                 │ 216 CHOOSE   │    │                            │ 314 INITIALIZE│
                 │   ENCLAVE    │    │                            │   SELECTED   │
                 └──────┬───────┘    │                            │   ENCLAVE    │
                         │           │                            └──────┬───────┘
                         ▼           │                                    ▲
                 ┌──────────────┐    │                                    │
                 │ 308 ENCLAVE  │    │                                    │
                 │    SELECT    │    │                                    │
                 └──────┬───────┘    │                                    │
                         │           │       ◇                            │
                         ▼           │      ╱ 310 ╲                       │
                        ╱◇╲          │     ╱ VERIFY ╲───────YES───────────┘
                       ╱310 ╲        │     ╲SELECTION╱
                      ╱VERIFY╲       │      ╲       ╱
                      ╲SELECT╱       │       ◇
                       ╲    ╱        │
                        ╲IN╱         │
                       IN USE        │
                         │           │
                         ▼           │
                 ┌──────────────┐    │   ┌──────────────┐      ┌─────────┐
                 │ 312 ERROR    │────┘   │  230 SHUT    │─────►(   END   )
                 │    CODE      │- - - ->│    DOWN      │      └─────────┘
                 └──────────────┘        └──────────────┘
```

Europäisches
Patentamt

European
Patent Office

Office européen
des brevets

## EUROPEAN SEARCH REPORT

Application Number

EP 12 15 2714

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/59049 A1 (VIRCON LIMITED [GB]; ROBB DAVID SHEPHERD STEWART [GB]; LEITCH VICTOR A) 18 November 1999 (1999-11-18) * page 3, line 18 - page 4, line 14 * | 1-12 | INV. G06F21/00 G07F7/10 |
| A | US 5 657 473 A (KILLEAN REGINALD [GB] ET AL) 12 August 1997 (1997-08-12) * column 4, lines 11-65 * | 1-12 | |
| A | US 5 452 431 A (BOURNAS JEAN-PIERRE [FR]) 19 September 1995 (1995-09-19) * abstract * | 1-12 | |
| A | EP 1 450 299 A1 (DAINIPPON PRINTING CO LTD [JP]) 25 August 2004 (2004-08-25) * paragraph [0017] - paragraph [0026] * | 1-12 | |
| A | EP 1 840 786 A1 (HARRIS CORP [US]) 3 October 2007 (2007-10-03) * abstract * | 1-12 | |
| A | WO 2008/015412 A1 (BRITISH TELECOMM [GB]; CHOONG KHONG NENG [MY]; LOW ANDY LOCK YEN [MY]) 7 February 2008 (2008-02-07) * claims 1,2 * | 1-12 | TECHNICAL FIELDS SEARCHED (IPC) G06F G07F |
| A | US 4 985 615 A (IIJIMA YASUO [JP]) 15 January 1991 (1991-01-15) * column 5, line 12 - column 6, line 28 * | 1-12 | |
| A | EP 0 159 539 A1 (SIEMENS AG [DE]) 30 October 1985 (1985-10-30) * page 4, lines 28-34 * * page 6, lines 1-11 * | 1-12 | |

The present search report has been drawn up for all claims

| Place of search | Date of completion of the search | Examiner |
|---|---|---|
| Munich | 26 April 2012 | Mezödi, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 12 15 2714

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2012

| Patent document cited in search report | | Publication date | Patent family member(s) | | Publication date |
|---|---|---|---|---|---|
| WO 9959049 | A1 | 18-11-1999 | AU | 3836499 A | 29-11-1999 |
| | | | DE | 69914595 D1 | 11-03-2004 |
| | | | DE | 69914595 T2 | 30-12-2004 |
| | | | DK | 1078311 T3 | 14-06-2004 |
| | | | EP | 1078311 A1 | 28-02-2001 |
| | | | GB | 2340630 A | 23-02-2000 |
| | | | JP | 4445669 B2 | 07-04-2010 |
| | | | JP | 2002514807 A | 21-05-2002 |
| | | | US | 6931503 B1 | 16-08-2005 |
| | | | WO | 9959049 A1 | 18-11-1999 |
| US 5657473 | A | 12-08-1997 | DE | 69110665 D1 | 27-07-1995 |
| | | | DE | 69110665 T2 | 14-03-1996 |
| | | | EP | 0516682 A1 | 09-12-1992 |
| | | | US | 5657473 A | 12-08-1997 |
| | | | WO | 9113403 A1 | 05-09-1991 |
| US 5452431 | A | 19-09-1995 | DE | 69223920 D1 | 12-02-1998 |
| | | | DE | 69223920 T2 | 18-06-1998 |
| | | | EP | 0540095 A1 | 05-05-1993 |
| | | | FR | 2683357 A1 | 07-05-1993 |
| | | | JP | 3396043 B2 | 14-04-2003 |
| | | | JP | 5217035 A | 27-08-1993 |
| | | | US | 5452431 A | 19-09-1995 |
| EP 1450299 | A1 | 25-08-2004 | CN | 1556967 A | 22-12-2004 |
| | | | EP | 1450299 A1 | 25-08-2004 |
| | | | JP | 4393733 B2 | 06-01-2010 |
| | | | JP | 2003162698 A | 06-06-2003 |
| | | | TW | I272540 B | 01-02-2007 |
| | | | US | 2004199784 A1 | 07-10-2004 |
| | | | WO | 03046826 A1 | 05-06-2003 |
| EP 1840786 | A1 | 03-10-2007 | EP | 1840786 A1 | 03-10-2007 |
| | | | US | 2007226494 A1 | 27-09-2007 |
| WO 2008015412 | A1 | 07-02-2008 | NONE | | |
| US 4985615 | A | 15-01-1991 | FR | 2635891 A1 | 02-03-1990 |
| | | | JP | 2059987 A | 28-02-1990 |
| | | | JP | 2695855 B2 | 14-01-1998 |
| | | | US | 4985615 A | 15-01-1991 |
| EP 0159539 | A1 | 30-10-1985 | DE | 3412663 A1 | 17-10-1985 |
| | | | EP | 0159539 A1 | 30-10-1985 |
| | | | JP | 60230284 A | 15-11-1985 |

**ANNEX TO THE EUROPEAN SEARCH REPORT
ON EUROPEAN PATENT APPLICATION NO.**

EP 12 15 2714

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2012

| Patent document cited in search report | Publication date | Patent family member(s) | Publication date |
|---|---|---|---|
| | | | |

EPO FORM P0459

For more details about this annex : see Official Journal of the European Patent Office, No. 12/82